# EUROPÄISCHE PATENTANMELDUNG

(11) **EP 1 959 343 A1**
(43) Veröffentlichungstag der Anmeldung: **20.08.2008**
(21) Anmeldenummer: 08000816.2
(22) Anmeldetag: 17.01.2008
(51) Int. Cl.: G06F 9/44

(54) **Verfahren zur Analyse einer Softwarekonfiguration eines tragbaren Datenträgers**

(30) Priorität: 15.02.2007 DE 102007007481
(71) Anmelder: Giesecke & Devrient GmbH, 81677 München (DE)
(72) Erfinder: Schnellinger, Michael, 84032 Landshut (DE)

(57) **Zusammenfassung**

Die Erfindung betrifft ein Verfahren zur Analyse einer Softwarekonfiguration, die wenigstens ein in einem tragbaren Datenträger (1) implementiertes Softwaremodul umfasst. Beim erfindungsgemäßen Verfahren wird vom tragbaren Datenträger (1) aus einem Code, der im tragbaren Datenträger (1) gespeichert ist und ein Bestandteil des Softwaremoduls ist oder die Ausführung des Softwaremoduls beeinflusst, durch mathematische Umformung eine Kennung ermittelt. Die ermittelte Kennung wird als Antwort auf ein empfangenes Kommando ausgesendet und als Basis für eine externe Analyse verwendet.

## Beschreibung

Die Erfindung betrifft ein Verfahren zur Analyse einer Softwarekonfiguration eines tragbaren Datenträgers. Weiterhin betrifft die Erfindung einen tragbaren Datenträger und ein Analysesystem zur Analyse einer Softwarekonfiguration eines tragbaren Datenträgers.

Tragbare Datenträger, die insbesondere als Chipkarten ausgebildet sein können, werden beispielsweise im Bereich des Zahlungsverkehrs, im Mobilfunkbereich, als Ausweisdokumente, als sonstige Sicherheitsdatenträger usw. eingesetzt. Je nach Anwendungsfall können tragbare Datenträger sehr einfach ausgebildet sein und lediglich über einen Speicher verfügen oder als ein vergleichsweise komplexes System mit einem Mikroprozessor, der mittels eines Betriebssystems betrieben wird. In tragbaren Datenträgern können unterschiedliche Betriebssysteme implementiert sein, für die in der Regel jeweils mehrere Versionen existieren. Zusätzlich zum Betriebssystem können in einem tragbaren Datenträger weitere Softwaremodule implementiert sein, die beispielsweise jeweils eine Applikation repräsentieren.

Mitunter ist es erforderlich zu ermitteln, welche Softwarekonfiguration, insbesondere welches Betriebssystem bzw. welche Version eines Betriebssystems, in einem tragbaren Datenträger implementiert ist. Eine derartige Information wird beispielsweise benötigt, wenn ein Update des im tragbaren Datenträger implementierten Betriebssystems vorgenommen werden soll oder eine Applikation im tragbaren Datenträger implementiert werden soll. In entsprechender Weise kann auch eine Information über eine im tragbaren Datenträger implementierte Applikation oder eine sonstige Software benötigt werden.

Aus der DE 10 2004 039 200 A1 ist es bekannt, zur Sicherstellung der Versionskonsistenz von funktionsbereitstellenden Bibliotheken und der sie einbindenden funktionsaufrufenden Applikationen die Bibliotheken und die Applikationen mit einer Versionscodierung zu versehen. Die Versionscodierungen werden aus den Schnittstellen der Bibliotheken erzeugt und können beim späteren Einbinden der Bibliotheken durch die Applikationen überprüft werden.

Aus der EP 1 575 005 A2 ist ein Applikationsbezeichner für eine in einer Chipkarte implementierte Applikation bekannt, der einen registrierten Bezeichner für einen Applikationsanbieter enthält. Aus dem registrierten Bezeichner für den Applikationsanbieter wird eine Netzwerkadresse ermittelt. An die ermittelte Netzwerkadresse wird eine Anfrage gerichtet. Die Antwort auf die Anfrage enthält Code und Daten für die in der Chipkarte implementierte Applikation.

Der Erfindung liegt die Aufgabe zugrunde, eine Analyse einer Softwarekonfiguration eines tragbaren Datenträgers auf effiziente Weise zu ermöglichen.

Diese Aufgabe wird durch ein Verfahren gemäß Anspruch 1, einen tragbaren Datenträger gemäß Anspruch 17 und ein System gemäß Anspruch 19 gelöst.

Das erfindungsgemäße Verfahren bezieht sich auf die Analyse einer Softwarekonfiguration, die wenigstens ein in einem tragbaren Datenträger implementiertes Softwaremodul umfasst. Beim erfindungsgemäßen Verfahren wird vom tragbaren Datenträger aus einem Code, der im tragbaren Datenträger gespeichert ist und ein Bestandteil des Softwaremoduls ist oder die Ausführung des Softwaremoduls beeinflusst, durch mathematische Umformung eine Kennung ermittelt. Die Analyse der Softwarekonfiguration wird auf Basis der Kennung durchgeführt.

Die Erfindung hat den Vorteil, dass die für die Analyse der Softwarekonfiguration verwendete Kennung des Softwaremoduls erst im Zusammenhang mit der Durchführung der Analyse erzeugt wird. Somit belegt die Kennung bis zu diesem Zeitpunkt keinen Speicherplatz im tragbaren Datenträger. Außerdem ist die erfindungsgemäße Vorgehensweise sehr flexibel, da die Kennung für beliebige Softwaremodule ermittelt werden kann und bei den Softwaremodulen keine vorbereitenden Maßnahmen erforderlich sind. Insbesondere ist es nicht erforderlich, die Softwaremodule bereits im Vorfeld mit einer Kennung auszustatten. Ein weiterer Vorteil besteht darin, dass das erfindungsgemäße Verfahren sehr zuverlässig arbeitet, da eine fehlerhafte Zuordnung zwischen dem Softwaremodul und der Kennung infolge der zeitnahen Ermittlung der Kennung unwahrscheinlich ist. Außerdem können mit dem erfindungsgemäßen Verfahren etwaige Änderungen oder Ergänzungen der Softwaremodule zuverlässig berücksichtigt werden.

Wenigstens ein Teil des Codes kann ein Funktionsbestandteil des Softwaremoduls sein. Dies hat den Vorteil einer sehr innigen Verbindung zwischen dem Code, der der Ermittlung der Kennung zugrunde gelegt wird und dem Softwaremodul, für das die Kennung ermittelt wird.

Der Code kann mit Hilfe von Informationen ermittelt werden, die im tragbaren Datenträger gespeichert sind. Dadurch können der Aufwand und das Fehlerrisiko vermieden werden, die mit einer Zuordnung von aus einer anderen Quelle ermittelten Informationen zum tragbaren Datenträger verbunden wären.

Wenigstens ein Teil des Codes kann Ergänzungen oder Modifikationen gegenüber einer ursprünglichen Version des Softwaremoduls beinhalten. Auf diese Weise kann im Rahmen der erfindungsgemäßen Analyse der Softwarekonfiguration ermittelt werden, welche Ergänzungen oder Modifikationen vorgenommen wurden.

Insbesondere kann wenigstens ein Teil des Codes ein Bestandteil einer im tragbaren Datenträger gespeicherten Tabelle sein oder mittels einer derartigen Tabelle ermittelt werden. In der Tabelle können Ergänzungen oder Modifikationen gegenüber einer ursprünglichen Version des Softwaremoduls abgelegt sein. Derartige Tabellen sind in tragbaren Datenträgern häufig ohnehin vorhanden, beispielsweise in Form von Sprungtabellen, die ggf. durch Patches oder ähnliches modifiziert sein können.

Im Rahmen des erfindungsgemäßen Verfahrens kann vorgesehen sein, dass die Kennung auf ein an den tragbaren Datenträger übermitteltes Kommando hin ermittelt wird. Dies eröffnet die Möglichkeit einer gezielten Analyse der Softwarekonfiguration. Insbesondere können mit dem Kommando Informationen übermittelt werden, die die Auswahl des Codes für die Ermittlung der Kennung beeinflussen.

Weiterhin kann beim erfindungsgemäßen Verfahren vorgesehen sein, dass die Ermittlung der Kennung vom tragbaren Datenträger nur dann durchgeführt wird, wenn eine vorgegebene Bedingung erfüllt ist. Dadurch kann beispielsweise verhindert werden, dass vom tragbaren Datenträger für sicherheitsrelevante Softwaremodule eine Kennung ausgegeben wird. Außerdem kann vorgesehen sein, dass die Art und Weise der Ermittlung der Kennung durch den tragbaren Datenträger davon abhängt, ob eine vorgegebene Bedihgung erfüllt ist. Dies ermöglicht eine gezielte Einflussnahme und dadurch auch eine Optimierung der Abläufe.

Für die Ermittlung der Kennung aus dem Code kann eine mathematische Umformung verwendet werden, die nicht umkehrbar ist. Dadurch können Manipulationen weitgehend ausgeschlossen werden. Außerdem kann die Ermittlung der Kennung aus dem Code eine Datenreduktion, insbesondere auf eine vorgegebene Datenlänge, beinhalten. Dies hat den Vorteil, dass die weitere Bearbeitung der Kennung erleichtert wird.

Die Kennung kann vom tragbaren Datenträger an ein externes Gerät ausgegeben werden. Insbesondere kann die Analyse der Softwarekonfiguration vom externen Gerät durchgeführt werden. Dies entlastet den tragbaren Datenträger. Die Analyse der Softwarekonfiguration kann durch einen Vergleich der ermittelten Kennung mit einem hinterlegten Referenzwert durchgeführt werden. Auf diese Weise kann die Analyse schnell und zuverlässig durchgeführt werden. Im Rahmen der Analyse der Softwarekonfiguration kann beispielsweise ermittelt werden, um welche Art Software und und/ oder um welche Version es sich handelt.

Der erfindungsgemäße tragbare Datenträger weist einen Speicher auf, in dem ein Code gespeichert ist, der ein Bestandteil eines Softwaremoduls ist oder die Ausführung des Softwaremoduls beeinflusst. Weiterhin ist beim erfindungsgemäßen tragbaren Datenträger eine Funktionalität vorgesehen, die durch mathematische Umformung des Codes eine Kennung für das Softwaremodul ermittelt, auf deren Basis eine Analyse der Softwarekonfiguration des tragbaren Datenträgers durchführbar ist.

Insbesondere ist der erfindungsgemäße tragbare Datenträger als eine Chipkarte ausgebildet.

Das erfindungsgemäße System zur Analyse einer Softwarekonfiguration, die wenigstens ein in einem tragbaren Datenträger implementiertes Softwaremodul umfasst, weist ein externes Gerät zur Auswertung einer Kennung für das Softwaremodul auf. Die Kennung wird vom tragbaren Datenträger aus einem Code, der im tragbaren Datenträger gespeichert ist und ein Bestandteil des Softwaremoduls ist oder die Ausführung des Softwaremoduls beeinflusst, durch mathematische Umformung ermittelt und an das externe Gerät übertragen.

Im externen Gerät oder in einem Server, der wenigstens zeitweise mit dem externen Gerät verbunden ist, können wenigstens ein Referenzwert für die Kennung und dem Referenzwert zugeordnete Informationen über die Softwarekonfiguration gespeichert sein.

Die Erfindung wird nachstehend anhand der in der Zeichnung dargestellten Ausführungsbeispiele erläutert. Dabei ist der tragbare Datenträger jeweils als Chipkarte ausgebildet. Die Erfindung bezieht sich gleichermaßen auch auf andersartig ausgebildete tragbare Datenträger. Insbesondere ist als ein tragbarer Datenträger im Sinn der Erfindung ein Rechnersystem anzusehen, bei dem die Ressourcen, d. h. Speicherressourcen und/oder Rechenkapazität (Rechenleistung) begrenzt sind, z. B. eine Chipkarte (Smart Card, Mikroprozessor-Chipkarte) oder ein Token oder ein Chipmodul zum Einbau in eine Chipkarte oder in ein Token. Der tragbare Datenträger kann eine beliebige standardisierte oder nicht standardisierte Gestalt haben, beispielsweise die Gestalt einer flachen Chipkarte ohne Norm oder nach einer Norm wie z.B. ISO 7810 (z.B. ID-1, ID-00, ID-000) oder die eines volumigen Tokens.

Es zeigen:
- Fig.1: ein stark vereinfachtes Blockschaltbild eines Ausführungsbeispiels für eine Anordnung zur Analyse einer Softwarekonfiguration einer Chipkarte mittels eines Endgeräts,
- Fig. 2: ein Flussdiagram für die erfindungsgemäße Vorgehensweise bei der Analyse der Softwarekonfiguration der Chipkarte,
- Fig. 3: ein Flussdiagramm zur Veranschaulichung der erfindungsgemäßen Vorgehensweise bei der Ermittlung der Kennung und
- Fig. 4: eine beispielhafte Darstellung der Adresstabelle der Chipkarte.

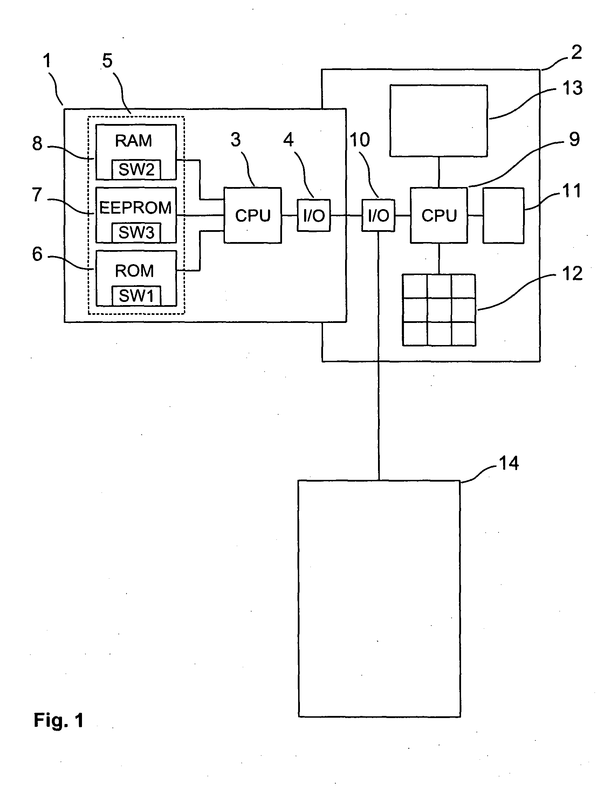

Fig.1 zeigt ein stark vereinfachtes Blockschaltbild eines Ausführungsbeispiels für eine Anordnung zur Analyse einer Softwarekonfiguration einer Chipkarte 1 mittels eines Endgeräts 2.

Die Chipkarte 1 weist eine Prozessoreinheit 3 auf, welche die Funktionsabläufe der Chipkarte 1 steuert und auch als Central Processing Unit, abgekürzt CPU, bezeichnet wird. Weiterhin weist die Chipkarte 1 eine Schnittstelle 4 zur Ein- und Ausgabe von Daten und einen Speicher 5 auf. Beim dargestellten Ausführungsbeispiel besteht der Speicher 5 aus einem Permanentspeicher 6, einem nichtflüchtigen Speicher 7 und einem flüchtigen Speicher 8. Alternativ dazu ist auch ein anderer Aufbau des Speichers 5 möglich. Die Prozessoreinheit 3 ist mit der Schnittstelle 4, dem Permanentspeicher 6, dem nichtflüchtigen Speicher 7 und dem flüchtigen Speicher 8 verbunden.

Im Permanentspeicher 6, der auch als Read Only Memory, kurz ROM, bezeichnet wird, sind Daten abgelegt, die während der gesamten Lebensdauer der Chipkarte 1 unverändert erhalten bleiben, beispielsweise Software, Parameter, personenbezogene Angaben, Schlüssel usw. Insbesondere ist im Permanentspeicher 6 ein Betriebssystem der Chipkarte 1 gespeichert. Beispielhaft ist ein Softwaremodul SW1 dargestellt, das im Permanentspeicher 6 abgelegt ist.

Der flüchtige Speicher 8, der auch als Random Access Memory, kurz RAM, bezeichnet wird, dient als Arbeitsspeicher für die Prozessoreinheit 3, so dass geheime Daten beispielsweise bei der Durchführung von Berechnungen im flüchtigen Speicher 8 zwischengespeichert werden. Im flüchtigen Speicher 8 bleibt der Speicherinhalt nur solange erhalten, wie die Chipkarte 1 mit einer Betriebsspannung versorgt wird. Als ein möglicher Speicherinhalt des flüchtigen Speichers 8 ist ein Softwaremodul SW2 dargestellt.

Der nichtflüchtige Speicher 7 kann während der Lebensdauer der Chipkarte 1 immer wieder neu beschrieben werden. Der jeweilige Speicherinhalt bleibt auch dann erhalten, wenn die Chipkarte 1 nicht mit der Betriebsspannung versorgt wird. Im nichtflüchtigen Speicher 7 sind beispielsweise Ergänzungen zum Betriebssystem, Anwendungssoftware, Schlüssel, Informationen zu einem Fehlbedienungszähler, personenbezogene Daten, Telefonnummern, Transaktionsdaten usw. abgelegt. In Fig.1 ist ein Softwaremodul SW3 als Speicherinhalt des nichtflüchtigen Speichers 7 eingezeichnet.

Das Endgerät 2, beispielsweise ein Personalcomputer, ist ähnlich aufgebaut wie die Chipkarte 1 und weist eine Prozessoreinheit 9, eine Schnittstelle 10 und einen Speicher 11 auf. Außerdem sind beim dargestellten Ausführungsbeispiel des Endgeräts 2 eine Tastatur 12 und eine Anzeige 13 vorhanden.

Die Prozessoreinheit 9 ist mit der Schnittstelle 10, dem Speicher 11, der Tastatur 12 und der Anzeige 13 verbunden. Der Speicher 11 kann analog zum Speicher 5 der Chipkarte 1 ausgebildet sein.

Über die Schnittstellen 4 und 10 kann eine Datenübertragung zwischen der Chipkarte 1 und dem Endgerät 2 durchgeführt werden. Die Datenübertragung kann mittels einer berührenden Kontaktierung der Chipkarte 1 durch das Endgerät 2 und/ oder kontaktlos abgewickelt werden. Dabei kann beispielsweise das T=1 oder das T=0 Protokoll zur Anwendung kommen. Eine Datenübertragung findet beispielsweise bei der Ausführung einer in der Chipkarte 1 implementierten Applikation im Zusammenspiel mit dem Endgerät 2 statt. Die Applikation kann zum Beispiel in Form eines der Softwaremodule SW1, SW2 oder SW3 in der Chipkarte 1 implementiert sein.

In Fig.1 ist weiterhin ein Server 14 dargestellt, mit dem das Endgerät 2 über die Schnittstelle 10 kommunizieren kann. Diese Kommunikation wird in der Regel auf andere Weise durchgeführt als die Kommunikation mit der Chipkarte 1. Es kann daher in Abwandlung der Darstellung der Fig.1 für die Kommunikation mit dem Server 14 eine zusätzliche Schnittstelle im Endgerät 2 vorgesehen sein, die nicht figürlich dargestellt ist.

Aus einer Vielzahl von Gründen kann es wünschenswert oder sogar erforderlich sein, über Informationen zu der in der Chipkarte 1 implementierten Softwarekonfiguration zu verfügen. Beispielsweise sind Informationen über die Version des Betriebssystems erforderlich, damit nachträglich passende Ergänzungen, beispielsweise als Patches implementiert werden können oder sonstige Anpassungen der Software vorgenommen werden können, beispielsweise bei einer Initialisierung oder Personalisierung. Im Rahmen der Erfindung ist es daher vorgesehen, die Softwarekonfiguration der Chipkarte 1 zu analysieren. Die diesbezügliche Vorgehensweise wird im Folgenden näher erläutert.

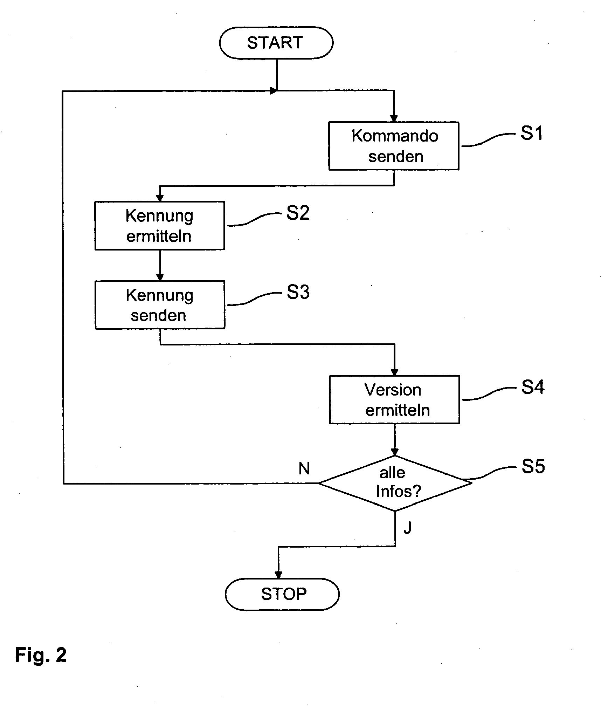

Fig. 2 zeigt ein Flussdiagramm für die erfindungsgemäße Vorgehensweise bei der Analyse der Softwarekonfiguration der Chipkarte 1. Die auf der linken Seite der Fig. 2 dargestellten Schritte werden von der Chipkarte 1 ausgeführt. Die auf der rechten Seite der Fig. 2 dargestellten Schritte werden vom Endgerät 2 ausgeführt.

In einem ersten Schritt S1 übermittelt das Endgerät 2 ein Kommando an die Chipkarte 1, das sich beispielsweise auf die Ermittlung des Namens und/ oder der Version des im Speicher 5 der Chipkarte 1 abgelegten Softwaremoduls SW1 bezieht. Bei dem Softwaremodul SW1 kann es sich beispielsweise um das Betriebssystem oder einen Teil des Betriebssystems der Chipkarte 1 handeln. Das Kommando kann insbesondere die Form einer APDU (=Application Protocol Data Unit) haben.

In einem sich anschließenden Schritt S2 ermittelt die Chipkarte 1 auf eine im Folgenden noch näher beschriebene Weise eine Kennung des Softwaremoduls SW1. Dann wird ein Schritt S3 ausgeführt, in dem die so ermittelte Kennung des Softwaremoduls SW1 von der Chipkarte 1 an das Endgerät 2 übertragen wird. Diese Antwort der Chipkarte 1 an das Endgerät 2 kann ebenfalls in Form einer APDU erfolgen.

Im Anschluss an Schritt S3 wird ein Schritt S4 ausgeführt, in dem das Endgerät 2 aus der empfangenen Kennung den Namen und/ oder die Version des Softwaremoduls SW1 ermittelt. Dies kann beispielsweise dadurch erfolgen, dass das Endgerät 2 die empfangene Kennung mit im Server 14 abgelegten Referenzwerten vergleicht, für die jeweils auch eine Angabe über das zugehörige Softwaremodul gespeichert ist. Die diesbezügliche Vorgehensweise wird im Folgenden noch näher erläutert.

An Schritt S4 schließt sich eine Schritt S5 an, in dem vom Endgerät 2 geprüft wird, ob mit den bislang vorliegenden Informationen eine Charakterisierung der Softwarekonfiguration möglich ist oder ob hierfür weitere Informationen benötigt werden. Falls die Informationen ausreichen, ist der Durchlauf des Flussdiagramms beendet.

Sollten die Informationen jedoch nicht ausreichen, so wird im Anschluss an Schritt S5 mit dem Schritt S1 fortgefahren, in dem vom Endgerät 2 ein Kommando an die Chipkarte 1 übermittelt wird. Im Gegensatz zur erstmaligen Ausführung des Schrittes S1 bezieht sich das Kommando allerdings nicht auf die Ermittlung des Namens und/ oder der Version des im Speicher 5 der Chipkarte 1 abgelegten Softwaremoduls SW1 sondern beispielsweise auf die Ermittlung des Namens und/ oder der Version des Softwaremoduls SW2. Daraufhin ermittelt die Chipkarte 1 im Schritt S2 die Kennung des Softwaremoduls SW2 und überträgt die Kennung im Schritt S3 an das Endgerät 2. Danach wird der Schritt S4 ausgeführt, um aus der Kennung den Namen und/ oder die Version des Softwaremoduls SW2 zu ermitteln. Es folgt dann wieder Schritt S5, in dem geprüft wird, ob alle benötigten Informationen vorliegen.

Auf die beschriebene Weise wird fortgefahren, bis sämtliche Informationen zur Softwarekonfiguration der Chipkarte 1 vorliegen und damit die Analyse der Softwarekonfiguration beendet ist.

Mit der geschilderten Vorgehensweise kann zum Beispiel eine Konsistenzprüfung der Softwarekonfiguration durchgeführt werden. Insbesondere können außerhalb des Permanentspeichers 6 implementierte Teile des Betriebssystems geprüft werden.

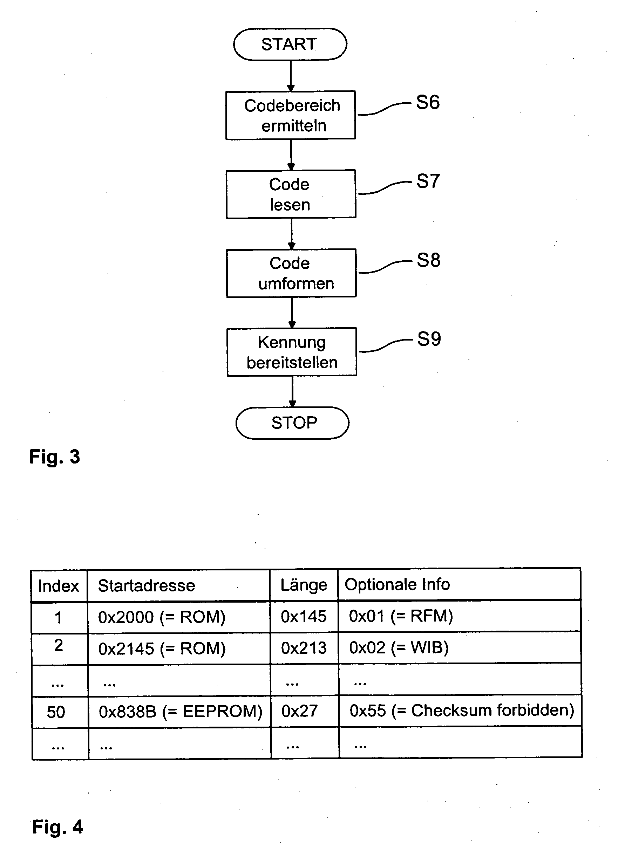

Fig. 3 zeigt ein Flussdiagramm zur Veranschaulichung der erfindungsgemä-ßen Vorgehensweise bei der Ermittlung der Kennung.

Die Kennung wird mittels einer Funktion PS (Patch Signatur) ermittelt, die ein Bestandteil des Betriebssystems der Chipkarte 1 sein kann. Gemäß einer ersten Variante der Erfindung ermittelt die Funktion PS die Kennung aus dem Code des Softwaremoduls, dessen Name und/ oder Version ermittelt werden soll. Der Code des Softwaremoduls kann im Permanentspeicher 6, im nichtflüchtigen Speicher 7, im flüchtigen Speicher 8 oder in einem sonstigen Speicher, beispielsweise einem Flash-Speicher abgelegt sein.

Bei der ersten Variante der Ermittlung der Kennung beginnt der Durchlauf des Flussdiagramms mit einem Schritt S6, in dem ein Codebereich des Softwaremoduls, dessen Name und/ oder Version zu bestimmen ist, ermittelt wird. Die Ermittlung des Codebereichs kann mit Hilfe einer Sprungtabelle des Betriebssystems der Chipkarte 1 erfolgen, über welche die einzelnen Funktionen des Betriebssystems aufgerufen werden können. Die Sprungtabelle kann zum Beispiel beim Erzeugen des Betriebssystems automatisch generiert werden.

Ebenso ist es auch möglich, beim Linken des Betriebssystems eine Adresstabelle zu generieren und die Ermittlung des Codebereichs mit Hilfe der Adresstabelle durchzuführen. Ein Beispiel für eine Adresstabelle ist in Fig. 4 dargestellt.

Von der Funktion PS wird eine der Adressen der Sprungtabelle bzw. der Adresstabelle als Startadresse des Codebereichs ausgewählt. Dabei kann durch das in Schritt S1 vom Endgerät 2 an die Chipkarte 1 übermittelte Kommando festgelegt werden, welcher Tabelleneintrag von der Funktion PS als Startadresse verwendet wird. Dieser Tabelleneintrag kann auch eine Angabe zu einer Endadresse oder einer Länge des Codebereichs enthalten, die von der Funktion PS ausgewertet wird.

An Schritt S6 schließt sich ein Schritt S7 an, in dem der Code des ermittelten Codebereichs von der Funktion PS gelesen wird. Dann wird ein Schritt S8 ausgeführt, in dem der ausgelesene Code mathematisch umgeformt wird. Durch die mathematische Umformung soll insbesondere die Länge des Codes reduziert werden. Beispielsweise kann die Länge auf einen vorgegebenen Wert reduziert werden.

Die mathematische Umformung des Codes kann mit Hilfe einer Reihe von unterschiedlichen mathematischen Methoden erfolgen. Beispielsweise kann im Rahmen der Umformung des Codes eine Prüfsumme ermittelt werden. Hier können zum Beispiel CRC-Verfahren zur Anwendung kommen. CRC steht dabei für Cylic Redundancy Check. Es können unterschiedliche Varianten des CRC-Verfahrens zum Einsatz kommen, die sich durch die Bit-Länge der für die Berechnung jeweils verwendeten Schieberegister unterscheiden. Bevorzugt wird ein CRC-16-Verfahren oder ein CRC-32-Verfahren eingesetzt, bei dem das verwendete Schieberegister eine Länge von 16 Bit bzw. 32 Bit besitzt.

Ebenso ist es auch möglich, mathematische Einwegfunktionen, wie beispielsweise die Hash-Funktionen MD5 oder SHA-1, einzusetzen, welche die Länge des Codes auf eine nicht umkehrbare Weise reduzieren.

Abhängig von der Art der Umformung können die Schritte S7 und S8 auch überlappend ausgeführt werden, d. h. die Umformung kann bereits vor dem vollständigen Auslesen des Codes aus dem Speicher 5 der Chipkarte 1 gestartet werden und das Auslesen während der Durchführung der Umformung oder in einer Pause fortgesetzt werden.

An Schritt S8 schließt sich ein Schritt S9 an, in dem die durch die mathematische Umformung des Codes ermittelte Kennung des Softwaremoduls zur weiteren Verwendung bereitgestellt wir. Gemäß dieser weiteren Verwendung kann es beispielsweise vorgesehen sein, die Kennung im Schritt S3 des in Fig. 2 dargestellten Ablaufs von der Chipkarte 1 an das Endgerät 2 zu übermitteln. Mit Schritt S9 ist der Durchlauf des Flussdiagramms beendet.

Alternativ zur vorstehend beschriebenen Auswertung des Codes, auf den die Sprungtabelle bzw. die Adresstabelle verweist, wird bei einer weiteren Variante der Ermittlung der Kennung die Sprungtabelle bzw. die Adresstabelle selbst ausgewertet. Dies kann dadurch erfolgen, dass der vorstehend beschriebenen Ermittlung der Kennung durch Umformung des Codes eine oder mehrere der in der Sprungtabelle bzw. Adresstabelle abgelegten Adressen als Code zugrunde gelegt werden. Auf diese Weise lässt sich mit wenig Aufwand unter anderem ermitteln, welche Patches in der Chipkarte 1 vorhanden sind.

Fig. 4 zeigt eine beispielhafte Darstellung der Adresstabelle der Chipkarte 1. Zur Erläuterung ist die Adresstabelle mit einer Kopfzeile versehen, in welcher der Inhalt der Spalten der Adresstabelle bezeichnet ist. Gemäß der Kopfzeile sind in einer ersten Spalte Werte für einen Index eingetragen, der die einzelnen Zeilen unterhalb der Kopfzeile fortlaufend nummeriert und den Zugriff auf eine jeweils gewünschte Zeile erleichtert. Die fortlaufende Nummerierung ist allerdings nicht zwingend. Außerdem ist es auch möglich auf andere Weise als über den Index, beispielsweise über die Position in der Adresstabelle, auf eine gewünschte Zeile zuzugreifen. In einer zweiten Spalte sind die Startadressen des Codes für die in der Chipkarte 1 implementierten Softwaremodule eingetragen. Eine dritte Spalte enthält die zur jeweiligen Startadresse gehörige Länge des Codes. In einer vierten Spalte sind optionale Informationen zum jeweiligen Softwaremodul eingetragen, auf das die in der zweiten Spalte angegebene Startadresse verweist. Diese Informationen können die Zugehörigkeit des Softwaremoduls zu einer Funktionsgruppe wie zum Beispiel Remote File Management (RFM) oder Wireless Intenet Browser (WIB) usw. kenntlich machen. Ebenso kann durch diese Informationen bei sicherheitskritischen Softwaremodulen eine Sperre realisiert werden, um die Ermittlung der Kennung in diesen Fällen zu verhindern.

Jede Zeile der Adresstabelle entspricht einem Eintrag für ein Softwaremodul oder für einen Teil eines Softwaremoduls. Bei den Softwaremodulen, auf welche die in der Adresstabelle eingetragenen Startadressen verweisen, kann es sich um native Funktionen und auch um JAVA-Methoden handeln, die sich als Ansammlung von JAVA-Bytecode darstellen lassen.

Falls auch die Möglichkeit bestehen soll, die Kennungen nachgeladener Applets zu bestimmen, kann vorgesehen werden, dass ein in der Chipkarte 1 implementierter Linker jeweils automatisch entsprechende Einträge in der Adresstabelle erzeugt.

Es können auch mehrere Adresstabellen in der Chipkarte 1 vorgesehen sein, beispielsweise um zwischen unterschiedlichen Funktionsgruppen der Softwaremodule oder zwischen bereits ursprünglich vorhandenem und nachgeladenem Code zu unterscheiden.

Wie anhand von Fig. 2 erläutert wird im Rahmen der Analyse der Softwarekonfiguration im Schritt S4 ein Vergleich einer ermittelten Kennung mit Referenzwerten durchgeführt, um den Namen und/oder die Version des zugehörigen Softwaremoduls zu ermitteln. Die für den Vergleich benötigten Referenzwerte können beim Erstellen der Initialisierung, d. h. bei der Generierung eines Abbilds des Permanentspeichers 6 bzw. des nichtflüchtigen Speichers 7 inklusive etwaiger Patches, für die Chipkarte 1 ermittelt werden. Hierzu kann beispielsweise ein Pearl-Script den Linker-Output verarbeiten und daraus die Adresstabelle erzeugen. Die Adresstabelle wird nachträglich an einer vorgegebenen Position im nichtflüchtigen Speicher 7 der Chipkarte 1 abgelegt und dadurch der Funktion PS der Chipkarte 1 zur Verfügung gestellt. Außerdem kann die Adresstabelle zusammen mit dem Linker-Output auf dem Server 14 abgelegt werden. Ebenso ist es auch möglich, Informationen aus dem Linker-Output in die Adresstabelle einzubinden und diese dann auf dem Server 14 abzulegen.

Weiterhin wird auf dem Server 14 eine Datenbank angelegt, welche die Namen und/oder Versionen und die dazugehörigen Kennungen der Softwaremodule bzw. Patches enthält. Diese können jeweils einem Index zugeordnet sein. Zudem können in der Datenbank Informationen über eine jeweilige Gesamtversion der Software abgelegt sein. Dabei kann die Gesamtversion beispielsweise durch eine Liste von Kennungen für die Softwaremodule definiert werden. Optional kann zusätzlich die Reihenfolge der Kennungen berücksichtigt sein, welche die Anordnung des Codes für die Softwaremodule im Speicher 5 der Chipkarte 1 widerspiegelt. Die Datenbank kann mit der ebenfalls auf dem Server 14 abgelegten Adresstabelle kombiniert sein. Prinzipiell ist es auch möglich, die Datenbank im Endgerät 2 anzulegen.

Aus der Datenbank können die für den Vergleich im Schritt S4 (siehe Fig. 2) benötigten Referenzwerte entnommen werden. Dabei kann der Zugriff auf die Referenzwerte beispielsweise über die jeweils zugeordneten Indizes erfolgen. Im Falle einer Übereinstimmung zwischen der aus der Chipkarte 1 ermittelten Kennung und einem der Referenzwerte wird der zum übereinstimmenden Referenzwert abgespeicherte Name und/oder die Version des Softwaremoduls aus der Datenbank ermittelt.

Die erfindungsgemäße Analyse der Softwarekonfiguration kann manuell veranlasst werden, beispielsweise indem die Übermittlung des Kommandos vom Endgerät 2 zur Chipkarte 1 gemäß Schritt S1 (siehe Fig. 2) initiiert wird.

Ebenso ist es auch möglich, die Analyse automatisch zu triggern. Beispielsweise kann ein Testtool, das im Endgerät 2 implementiert ist, durch die auf dem Server 14 abgelegte Adresstabelle Kenntnis über die für die Analyse benötigten Informationen erhalten. Das Testtool kann mit Hilfe der in der Adressdatei gespeicherten Daten die Kennungen aller einzelnen Softwaremodule, die in der Chipkarte 1 implementiert sind, von der Funktion PS der Chipkarte 1 errechnen lassen. Ebenso ist es auch möglich, dass das Testtool die Kennungen gebündelt nach Blöcken von jeweils mehreren Softwaremodulen errechnen lässt. Hierzu können die Kennungen zu den einzelnen Softwaremodulen eines Blocks jeweils zu einer gemeinsamen Blockkennung verknüpft werden. Auf Basis eines Vergleichs mit den zugehörigen Referenzwerten, die in der Datenbank auf dem Server 14 gespeichert sind, kann beispielsweise eine Aussage zur Konsistenz des Betriebssystems getroffen werden. Dabei besteht die Möglichkeit, weitere Vorgaben oder Randbedingungen bei der Analyse zu berücksichtigen.

Das Testtool kann für den Einsatz während der Software-Entwicklung, im Rahmen der Initialisierung oder Personalisierung der Chipkarte 1 oder für eine Analyse der fertigen Chipkarte 1 ausgelegt werden. Demgemäß kann der Analyseprozess jeweils unterschiedlich ablaufen. Beispielsweise kann während der Software-Entwicklung die Softwarekonfiguration allein über das Vorhandensein bestimmter Kennungen unabhängig von deren Reihenfolge definiert sein. Demgegenüber kann im Rahmen der Initialisierung oder Personalisierung die Reihenfolge der Kennungen in die Definition der Softwarekonfiguration einbezogen werden.

Da manche Patches eine bestimmte File-Konfiguration voraussetzen, kann das Testtool auch gleichzeitig die Existenz von Dedicated Fils (DF) oder E-lementary Files (EF) auf der Chipkarte 1 prüfen.

## Patentansprüche

1. Verfahren in einem tragbaren Datenträger (1) zur Analyse einer Softwarekonfiguration des tragbaren Datenträgers (1), die wenigstens ein in dem tragbaren Datenträger (1) implementiertes Softwaremodul umfasst,
Empfangen eines Kommandos;
Ermitteln einer Kennung in dem tragbaren Datenträger (1) nach dem Empfangen des Kommandos durch mathematische Umformung aus einem Code, der im tragbaren Datenträger (1) gespeichert ist und ein Bestandteil des Softwaremoduls ist oder die Ausführung des Softwaremoduls beeinflusst;
Senden der ermittelten Kennung als Antwort auf das empfangene Kommando für eine Analyse der Softwarekonfiguration des tragbaren Datenträgers auf Basis der gesendeten Kennung.

2. Verfahren nach Anspruch 1, **dadurch gekennzeichnet, dass** wenigstens ein Teil des Codes ein Funktionsbestandteil des Softwaremoduls ist.

3. Verfahren nach einem der vorhergehenden Ansprüche, **dadurch gekennzeichnet, dass** der Code mit Hilfe von Informationen ermittelt wird, die im tragbaren Datenträger (1) gespeichert sind.

4. Verfahren nach einem der vorhergehenden Ansprüche, **dadurch gekennzeichnet, dass** wenigstens ein Teil des Codes Ergänzungen oder Modifikationen gegenüber einer ursprünglichen Version des Softwaremoduls beinhaltet.

5. Verfahren nach einem der vorhergehenden Ansprüche, **dadurch gekennzeichnet, dass** wenigstens ein Teil des Codes ein Bestandteil einer im tragbaren Datenträger (1) gespeicherten Tabelle ist oder mittels einer derartigen Tabelle ermittelt wird.

6. Verfahren nach Anspruch 5, **dadurch gekennzeichnet, dass** die Tabelle ein funktionaler Bestandteil der Software des tragbaren Datenträgers ist, der zum Zweck der Versionsüberprüfung wieder verwendet wird.

7. Verfahren nach Anspruch 5 oder 6, **dadurch gekennzeichnet, dass** in der Tabelle Verweise auf Ergänzungen oder Modifikationen gegenüber einer ursprünglichen Version des Softwaremoduls abgelegt sind.

8. Verfahren nach einem der vorhergehenden Ansprüche, **dadurch gekennzeichnet, dass** die Schritte des Empfangens eines Kommandos, Ermittelns einer Kennung und Senden der ermittelten Kennung für unterschiedliche Bestandteile des Softwaremoduls wiederholt ausgeführt werden, um die Softwarekonfiguration bestimmbar zu machen.

9. Verfahren nach einem der vorhergehenden Ansprüche, **dadurch gekennzeichnet, dass** mit dem Kommando Informationen übermittelt werden, die die Auswahl des Codes für die Ermittlung der Kennung beeinflussen.

10. Verfahren nach einem der vorhergehenden Ansprüche, **dadurch gekennzeichnet, dass** die Ermittlung der Kennung vom tragbaren Datenträger (1) nur dann durchgeführt wird, wenn eine vorgegebene Bedingung erfüllt ist.

11. Verfahren nach einem der vorhergehenden Ansprüche, **dadurch gekennzeichnet, dass** die Art und Weise der Ermittlung der Kennung durch den tragbaren Datenträger (1) davon abhängt, ob eine vorgegebene Bedingung erfüllt ist.

12. Verfahren nach einem der vorhergehenden Ansprüche, **dadurch gekennzeichnet, dass** die für die Ermittlung der Kennung aus dem Code verwendete mathematische Umformung nicht umkehrbar ist.

13. Verfahren nach einem der vorhergehenden Ansprüche, **dadurch gekennzeichnet, dass** die Ermittlung der Kennung aus dem Code eine Datenreduktion, insbesondere auf eine vorgegebene Datenlänge, beinhaltet.

14. Verfahren nach einem der vorhergehenden Ansprüche, **dadurch gekennzeichnet, dass** die Kennung vom tragbaren Datenträger (1) an ein externes Gerät (2) ausgegeben wird.

15. Verfahren nach einem der vorhergehenden Ansprüche, **dadurch gekennzeichnet, dass** die Analyse der Softwarekonfiguration vom externen Gerät (2) durchgeführt wird.

16. Verfahren nach einem der vorhergehenden Ansprüche, **dadurch gekennzeichnet, dass** die Analyse der Softwarekonfiguration durch einen Vergleich der ermittelten Kennung mit einem hinterlegten Referenzwert durchgeführt wird.

17. Verfahren nach einem der vorhergehenden Ansprüche, **dadurch gekennzeichnet, dass** im Rahmen der Analyse der Softwarekonfiguration ermittelt wird, um welche Art Software und/ oder um welche Version es sich handelt.

18. Verfahren nach einem der vorhergehenden Ansprüche, **dadurch gekennzeichnet, dass** der tragbare Datenträger das Senden einer ermittelten Kennung in Antwort auf das Kommando nur bis zu einer vorbestimmten Phase im Lebenszyklus des tragbaren Datenträgers unterstützt.

19. Verfahren nach Anspruch 18, **dadurch gekennzeichnet, dass** in dem tragbaren Datenträger die Funktion des Sendens einer ermittelten Kennung in Antwort auf das Kommando vor der Auslieferung des tragbaren Datenträgers an einen Benutzer deaktiviert wird.

20. Verfahren nach einem der vorhergehenden Ansprüche, **dadurch gekennzeichnet, dass** der tragbare Datenträger das Senden einer ermittelten Kennung in Antwort auf das Kommando nur in einer Phase der Entwicklung der Software des tragbaren Datenträgers und/ oder des Testens der Software unterstützt.

21. Verfahren nach einem der vorhergehenden Ansprüche, **dadurch gekennzeichnet, dass** in Antwort auf das eine Kommando eine Vielzahl von Kennungen für Teilabschnitte der Software ermittelt und als Antwort ausgesendet werden.

22. Tragbarer Datenträger mit einem Speicher (5), in dem ein Code gespeichert ist, der ein Bestandteil eines Softwaremoduls ist oder die Ausführung des Softwaremoduls beeinflusst, **dadurch gekennzeichnet, dass** eine Funktionalität vorgesehen ist, die auf ein empfangenes Kommando hin, durch mathematische Umformung des Codes eine Kennung für das Softwaremodul ermittelt und als Antwort auf das Kommando die ermittelte Kennung aussendet, auf deren Basis eine Analyse der Softwarekonfiguration des tragbaren Datenträgers (1) durchführbar ist.

23. Tragbarer Datenträger nach Anspruch 22, **dadurch gekennzeichnet, dass** er als eine Chipkarte ausgebildet ist.

24. System zur Analyse einer Softwarekonfiguration, die wenigstens ein in einem tragbaren Datenträger (1) implementiertes Softwaremodul umfasst, mit einem externen Gerät (2) zur Auswertung einer Kennung für das Softwaremodul, die vom tragbaren Datenträger (1) aus einem Code, der im tragbaren Datenträger (1) gespeichert ist und ein Bestandteil des Softwaremoduls ist oder die Ausführung des Softwaremoduls beeinflusst, durch mathematische Umformung ermittelt und an das externe Gerät (2) übertragen wird.

25. System nach Anspruch 24, **dadurch gekennzeichnet, dass** im externen Gerät (2) oder in einem Server (14), der wenigstens zeitweise mit dem externen Gerät (2) verbunden ist, wenigstens ein Referenzwert für die Kennung und dem Referenzwert zugeordnete Informationen über die Softwarekonfiguration gespeichert sind.

26. System nach Anspruch 24 oder 25, **dadurch gekennzeichnet, dass** in dem externen Gerät (2) oder in dem Server (14) eine Vielzahl von Referenzwerten gespeichert sind.

27. System nach einem der Ansprüche 24 bis 26, **dadurch gekennzeichnet, dass** zumindest einzelnen Referenzwerten mehrere Referenz-Softwarekonfigurationen zugeordnet sind.

28. System nach einem der Ansprüche 24 bis 27, **dadurch gekennzeichnet, dass** in der Analyse erkannt wird, dass die Softwarekonfiguration des tragbaren Datenträgers einer Referenz-Softwarekonfiguration entspricht, wenn die empfangenen Kennungen den Referenzwerten entsprechen, die der Referenz-Softwarekonfiguration zugeordnet sind.

29. System nach einem der Ansprüche 24 bis 28, **dadurch gekennzeichnet, dass** in der Analyse erkannt wird, dass die Softwarekonfiguration des tragbaren Datenträgers einer Referenz-Softwarekonfiguration entspricht, wenn die empfangenen Kennungen den Referenzwerten und deren Indexwerten entsprechen, die der Referenz-Softwarekonfiguration zugeordnet sind.

30. System nach einem der Ansprüche 24 bis 29, **dadurch gekennzeichnet, dass** zumindest einzelnen Referenzwerten ein Indexwert zugeordnet ist, welcher einer Referenzposition in der Reihenfolge empfangener Kennungen nach einer Folge der Kommandos entspricht.

31. System nach einem der Ansprüche 24 bis 30, **dadurch gekennzeichnet, dass** mit dem Kommando an den tragbaren Datenträger ein Indexwert übergeben wird, der - vorzugsweise als Index in eine Tabelle in dem tragbaren Datenträger mit Verweisen auf eine Vielzahl von Teilbestandteilen der Software - den Code bestimmt, für den die Kennung zu ermitteln ist und zumindest einzelnen Referenzwerten ein Indexwert zugeordnet ist, welcher als Referenz für den Parameter verwendet wird.
